# EUROPEAN PATENT APPLICATION

(11) **EP 3 674 175 A1**
(43) Date of publication of application: **01.07.2020**
(21) Application number: 19219239.1
(22) Date of filing: 23.12.2019
(51) Int. Cl.: B62D 5/00, B62D 9/00, B62D 15/02, B60W 30/045

(54) **CONTROL DEVICE FOR VEHICLE**

(30) Priority: 26.12.2018 JP 2018242315
(71) Applicant: JTEKT Corporation, Osaka-shi Osaka 542-8502 (JP)
(72) Inventor: YAMAMOTO, Yasuharu, Osaka-shi, Osaka 542-8502 (JP)
(74) Representative: Winter, Brandl, Fürniss, Hübner, Röss, Kaiser, Polte - Partnerschaft mbB

(57) **Abstract**

A control device for a vehicle according to the invention is provided. The vehicle includes a steering device (2), a braking and driving force generation device, a steered angle state quantity sensor and a vehicle wheel speed sensor. The control device includes an electronic control unit configured to control an operation of the braking and driving force generation device, to calculate an actual traveling direction (θd) which is an actual direction of travel of the vehicle, based on the vehicle wheel speed of each of the right and left steered wheels (5R, 5L) and the steered angle state quantity, and to cause the actual traveling direction (θd) to follow a target traveling direction (θd*) which is a target direction of travel of the vehicle.

## Description

### BACKGROUND OF THE INVENTION

### 1. Field of the Invention

The present invention relates to a control device for a vehicle.

### 2. Description of Related Art

As one type of steering device, there is a steer-by-wire type steering device in which power transmission between a steering portion that is steered by a driver and a turning portion by which steered wheels are turned in response to a steering operation by the driver is separated. The steering device mentioned above includes a steering-side actuator that includes a steering-side motor, and a turning-side actuator that includes a turning-side motor. In the steering device, normally, the steering-side actuator applies a steering reaction force against the driver's steering operation to the steering portion, and a turning-side actuator applies a turning force to the turning portion so that the turning portion turns the steered wheels, thereby a direction of travel of a vehicle is changed.

Regarding a control of an steered angle of the steered wheels (the direction of travel of the vehicle), a steering control device is disclosed in, for example, Japanese Unexamined Patent Application Publication No. 2017-24683 (JP 2017-24683 A). The steering control device calculates the steered angle of the steered wheels based on a stroke position of a steered shaft that is detected by a sensor (e.g. potentiometer) and controls an operation of the turning-side motor so that the calculated steered angle follows a target steered angle that is a target value of the steered angle.

### SUMMARY OF THE INVENTION

Here, a case is assumed in which the steered angle cannot be controlled by the turning-side actuator due to, for example, a failure of energizing the turning-side motor. To avoid a state where the direction of travel of the vehicle becomes uncontrollable in such a case, a structure is proposed in which a clutch that mechanically couples the steering portion and the turning portion is provided, for example(refer to Japanese Unexamined Patent Application Publication No. 2018-187998 (JP 2018-187998 A), for example). However, there may be a case where the clutch malfunctions. Therefore, there is a demand for development of a new technology that can control the direction of travel of the vehicle even when the steered angle cannot be controlled by the turning-side actuator.

The present invention provides a control device for a vehicle that can control the direction of travel of the vehicle when the steered angle of the steered wheels cannot be controlled by the steering device.

A control device for a vehicle according to an aspect of the invention is provided. The vehicle includes a steering device including a steering portion and a turning portion that turns right and left steered wheels in accordance with a steering operation input to the steering portion, the steering device having a structure in which power transmission to and from the steering portion is separated from power transmission to and from the turning portion, a braking and driving force generation device configured to apply a braking force and a driving force to the right and left steered wheels independently of each other, a steered angle state quantity sensor that detects a steered angle state quantity that is convertible to a steered angle of the right and left steered wheels, and a vehicle wheel speed sensor that detects a vehicle wheel speed of each of the right and left steered wheels. The control device includes an electronic control unit configured to control an operation of the braking and driving force generation device, to calculate an actual traveling direction which is an actual direction of travel of the vehicle, based on the vehicle wheel speed of each of the right and left steered wheels and the steered angle state quantity, and to cause the actual traveling direction to follow a target traveling direction which is a target direction of travel of the vehicle.

According to the configuration above, the direction of travel of the vehicle can be controlled by applying the braking and driving forces to the right and left steered wheels independently of each other, even when the steering device malfunctions. Here, when there is a difference between the right and left vehicle wheel speeds, the direction of travel of the vehicle in accordance with the steered angle of the steered wheels is not consistent with the actual direction of travel of the vehicle. On the basis of this, in the configuration above, the actual direction of travel of the vehicle is calculated based on the steered angle calculated based on the steered angle state quantity and the right and left vehicle wheel speeds, and the braking and driving forces are controlled so that the actual direction of travel of the vehicle follows the target direction of travel. Therefore, the direction of travel of the vehicle can be controlled with high accuracy.

In the configuration according to the aspect, the braking and driving force generation device may be a right wheel motor and a left wheel motor, and the right wheel motor and the left wheel motor may be provided in the right and left steered wheels, respectively.

According to the aspect of the invention, the direction of travel of the vehicle can be controlled when the steered angle of the steered wheels cannot be controlled by the steering device.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration diagram showing a steer-by-wire type steering device;
FIG. 2 is a block diagram of a steering control device relating to a control of a right wheel motor and a left wheel motor; and
FIGS. 3A to 3C are schematic diagrams showing a direction of travel of a vehicle.

### DETAILED DESCRIPTION OF EMBODIMENTS

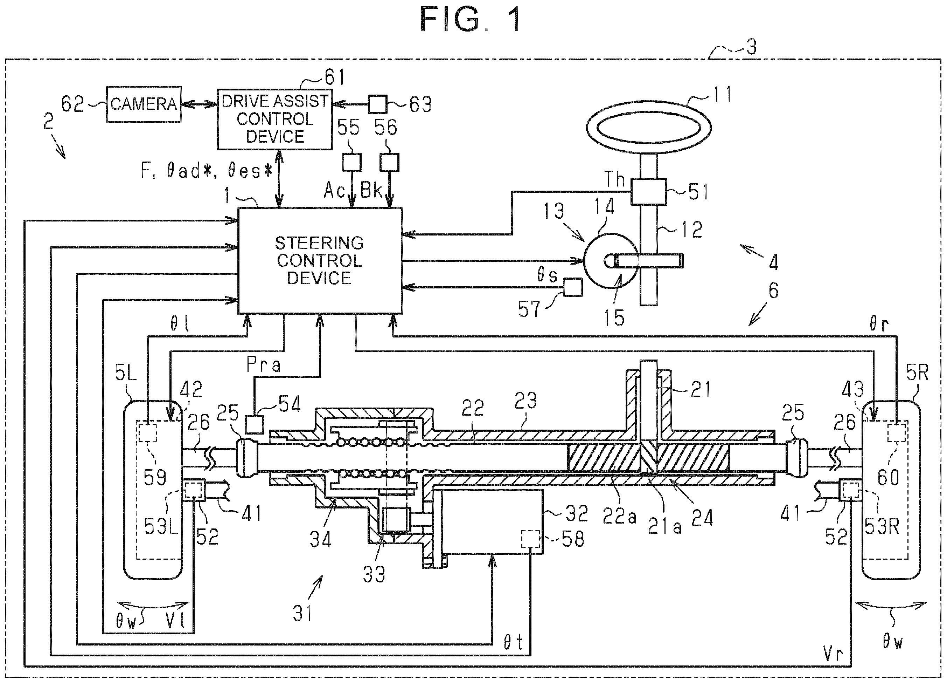

An embodiment in which a control device for a vehicle is applied to a steering control device that controls an operation of a steering device will be described. As shown in FIG. 1, a steer-by-wire steering device 2 that is subject to a control by a steering control device 1 is mounted on a front side in a direction of travel (hereinafter referred to as a "traveling direction") of a vehicle 3. The steering device 2 includes a steering portion 4 and a turning portion 6. The steering portion 4 is operated by a driver. The turning portion 6 turns right and left steered wheels 5R, 5L in conjunction with each other in response to a steering operation of the steering portion 4 by the driver.

The steering portion 4 includes a steering shaft 12 and a steering-side actuator 13. A steering wheel is fixed to the steering shaft 12. The steering-side actuator 13 is configured to apply a steering reaction force to the steering shaft 12. The steering-side actuator 13 includes a steering-side motor 14 and a steering-side reduction device 15. The steering-side motor 14 serves as a drive source. The steering-side reduction device 15 reduces a rotation of the steering-side motor 14 and transmits the reduced rotation to the steering shaft 12. A three-phase brushless motor, for example, is adopted as the steering-side motor 14 of the embodiment.

The turning portion 6 includes a pinion shaft 21, a rack shaft 22, rack housing 23, and a rack and pinion mechanism 24. The rack shaft 22 serves as a steered shaft coupled to the pinion shaft 21. The rack shaft 22 is housed in the rack housing 23 so as to reciprocate in the rack housing 23. The rack and pinion mechanism 24 converts the rotation of the pinion shaft 21 to a reciprocating motion of the rack shaft 22. The pinion shaft 21 and the rack shaft 22 are arranged with a predetermined intersection angle therebetween. The rack and pinion mechanism 24 is configured such that pinion teeth 21a provided on the pinion shaft 21 meshes with rack teeth 22a provided on the rack shaft 22. Tie rods 26 are connected to respective ends of the rack shaft 22 through rack ends 25. Each of the rack ends 25 is formed of a ball joint. The tip ends of the tie rods 26 are coupled to respective knuckles (not illustrated) to which the right and left steered wheels 5R, 5L are assembled.

Further, the turning portion 6 includes a turning-side actuator 31. The turning-side actuator 31 applies a turning force to the rack shaft 22 so as to turn the right and left steered wheels 5R, 5L. The turning-side actuator 31 includes a turning-side motor 32, a transmission mechanism 33, and a conversion mechanism 34. The turning-side motor 32 serves as a drive source. The turning-side actuator 31 applies the turning force to the turning portion 6 by transmitting a rotation of the turning-side motor 32 to the conversion mechanism 34 through the transmission mechanism 33 and converting the transmitted rotation to a reciprocating motion of the rack shaft 22 by the conversion mechanism 34. In the embodiment, a three-phase brushless motor, for example, is adopted as the turning-side motor 32, a belt mechanism, for example, is adopted as the transmission mechanism 33, and a ball screw mechanism, for example, is adopted as the conversion mechanism 34.

In the steering device 2 configured as described above, a turning force is applied to the rack shaft 22 from the turning-side actuator 31 in response to the steering operation by the driver, thereby a steered angle θw of the right and left steered wheels 5R, 5L is changed. At this time, a steering reaction force against the steering operation of the driver is applied to the steering wheel 11 from the steering-side actuator 13.

A driving force is applied from an engine (not illustrated), such as an internal combustion engine, to the right and left steered wheels 5R, 5L through respective front axles 41 to run the vehicle 3. Further, a right wheel motor 43 is provided for the right steered wheel 5R, and a left wheel motor 42 is provided for the left steered wheel 5L. The right and left wheel motors 43, 42 are braking and driving force generation devices configured to apply a braking force and a driving force to the respective right and left steered wheels 5R, 5L independently of each other. The right and left wheel motors 43, 42 are configured as in-wheel motors that are provided for the right and left steered wheels 5R, 5L, respectively. The right wheel motor 43 and the left wheel motor 42 each have a differential mechanism (e.g. planetary gear mechanism). The right wheel motor 43 and the left wheel motor 42 are configured to apply the braking and driving forces to the respective right and left steered wheels 5R, 5L independently of each other, with the braking and driving forces interposed on the driving force from an engine in accordance with a rotational direction of each of the right and left wheel motors. In the embodiment, a three-phase brushless motor, for example, is adopted as the right and left wheel motors 43, 42.

Next, an electrical configuration according to the embodiment will be described. The steering control device 1 is connected to the steering-side motor 14, the turning-side motor 32, and the right wheel motor 43 and left wheel motor 42, and controls operations of these components. The steering control device 1 includes a central processing unit (CPU) and a memory (both not illustrated), and executes various controls as the CPU executes a program stored in the memory for each prescribed calculation period. That is, the steering control device 1 is an electronic control unit (ECU).

A torque sensor 51 is connected to the steering control device 1. The torque sensor 51 detects a steering torque Th applied to the steering shaft 12. Further, a right front wheel sensor 53R and a left front wheel sensor 53L are connected to the steering control device 1. The right front wheel sensor 53R and left front wheel sensor 53L are vehicle wheel speed sensors. The right front wheel sensor 53R and left front wheel sensor 53L are provided for respective hub units 52. The hub units 52 support the right and left steered wheels 5R, 5L through the front axles 41 so that the right and left steered wheels 5R, 5L rotate. The right front wheel sensors 53R and left front wheel sensor 53L detect vehicle wheel speeds Vr, VI, of the right and left steered wheels 5R, 5L, respectively. A stroke sensor 54 is connected to the steering control device 1. The stroke sensor 54 detects a stroke position Pra of the rack shaft 22. The steered angle θw is uniquely determined in accordance with the stroke position Pra. Therefore, the stroke position Pra can be converted to the steered angle θw. That is, the stroke position Pra corresponds to a steered angle state quantity, and the stroke sensor 54 corresponds to a steered angle state quantity sensor. An accelerator sensor 55 and a brake sensor 56 are connected to the steering control device 1. The accelerator sensor 55 outputs an accelerator signal Ac indicating an accelerator pedal operation amount. The brake sensor 56 outputs a brake signal Bk indicating a depression amount of a brake (not illustrated).

A steering-side rotation sensor 57 and a turning-side rotation sensor 58 are connected to the steering control device 1. The steering-side rotation sensor 57 detects a rotation angle θs of the steering-side motor 14 as a relative angle within the range of 360 degrees. The turning-side rotation sensor 58 detects a rotation angle θt of the turning-side motor 32 as a relative angle. The steering torque Th and the rotation angles θs, θt are detected as positive values when the driver steers the steering wheel 11 in one direction (right in the embodiment), and detected as negative values when the driver steers the steering wheel 11 in the other direction (left in the embodiment). A right wheel rotation angle sensor 60 and a left wheel rotation angle sensor 59 are connected to the steering control device 1. The right wheel rotation angle sensor 60 detects a rotation angle θr of the right wheel motor 43 as a relative angle value. The left wheel rotation angle sensor 59 detects a rotation angle θ1 of the left wheel motor 42 as a relative angle value.

The steering control device 1 is connected to a drive assist control device 61 that is provided outside of the steering control device 1 so that the steering control device 1 communicate with the drive assist control device 61. The drive assist control device 61 of the embodiment executes, as a drive assist control, a lane departure prevention assist control (or lane keeping control), for example. Under that control, the steering operation of the driver is assisted to facilitate traveling of the vehicle with a traveling lane in which the vehicle is currently traveling being kept. The drive assist control device 61 calculates, when executing the lane departure prevention assist control, an ideal steered angle based on an image data captured by a camera 62 so as to keep the vehicle to travel within a lane. The drive assist control device 61 then calculates a drive assist command angle in accordance with a deviation between the calculated ideal steered angle and actual steered angle θw of the right and left steered wheels 5R, 5L. An operation switch 63 for executing the drive assist control is connected to the drive assist control device 61. The operation switch 63 is provided, for example, near a driver seat of the vehicle. The drive assist control device 61 executes the lane departure prevention assist control, which is the drive assist control, in accordance with turning on and off of the operation switch 63. The drive assist control device 61 outputs a drive assist flag F indicating whether the drive assist control is executed, and when the drive assist control is executed, the drive assist control device 61 outputs a drive assist command angle θad* to the steering control device 1.

The steering control device 1 acquires the rotation angle θs of the steering-side motor 14 and the rotation angle θt of the turning-side motor 32 by, for example, counting the number of rotations from a steering neutral position and converting the rotation angle θs and the rotation angle θt to absolute angles within a range exceeding 360 degrees. The steering control device 1 calculates the steering angle θh that is a rotation angle of the steering wheel 11 by multiplying the rotation angle θs of the steering-side motor 14 by a conversion coefficient that is based on a rotation speed ratio of the steering-side reduction device 15. Further, the steering control device 1 calculates a rotation angle of the pinion shaft 21 (turning correspondence angle θp) by multiplying the rotation angle θt of the turning-side motor 32 by a conversion coefficient that is determined based on a gear ratio of the rack and pinion mechanism 24, a lead of the conversion mechanism 34, and a reduction ratio of the transmission mechanism 33. The turning correspondence angle θp is a rotation angle that is convertible to the steered angle θw of the right and left steered wheels 5R, 5L. The turning correspondence angle θp is equal to the steering angle θh when it is assumed that the steering shaft 12 and the pinion shaft 21 are connected to each other.

The steering control device 1 calculates, in a normal state where the steering control device 1 does not execute the drive assist control, a target steering angle θh* based on the steering torque Th using a model formula. The steering control device 1 executes a current feedback control so that the steering angle θh follows the target steering angle θh*. By this control, a driving electric power is supplied to the steering-side motor 14 and a steering reaction force is applied to the steering portion 4 (steering wheel 11). As a model formula, for example, a formula that expresses a relationship between the torque and the rotation angle of a rotary shaft that rotates with the rotation of the steering wheel 11 in a configuration in which the steering wheel 11 and the right and left steered wheels 5R, 5L are mechanically coupled can be used. The steering control device 1 executes the current feedback control so that the turning correspondence angle θp follows a target turning correspondence angle θp * based on the target steering angle θh*. By this control, the driving electric power is supplied to the turning-side motor 32 and a turning force is applied to the turning portion 6. The steering control device 1 executes the current feedback control when the drive assist control is executed so that the turning correspondence angle θp follows a drive assist command angle θad* input from the drive assist control device 61. By this control, the driving electric power is supplied to the turning-side motor 32 and a turning force is applied to the turning portion 6.

Here, a case is assumed in which the steered angle θw cannot be controlled by the turning-side actuator 31 due to, for example, a failure of energizing the turning-side motor 32. In this case, the steering control device 1 calculates an actual traveling direction θd based on the vehicle wheel speeds Vr, Vl of the right and left steered wheels 5R, 5L and the stroke position Pra. The actual traveling direction θd is an actual traveling direction of the vehicle. The steering control device 1 then controls braking and driving forces that are applied to the right and left steered wheels 5R, 5L by the right and left wheel motors 43, 42 so that the actual traveling direction θd follows the target traveling direction θd* that is a target traveling direction of the vehicle 3. The traveling direction of the vehicle 3 is represented by an angle with respect to a longitudinal direction of the vehicle 3. The angle of the traveling direction when the vehicle 3 is traveling straight is defined as zero degrees. The angle of the traveling direction when the vehicle 3 travels in one of right and left directions is defined as a positive value. The angle of the traveling direction when the vehicle 3 travels in the other of right and left directions is defined as a negative value. When the traveling direction of the vehicle 3 is controlled based on the braking and driving forces that are applied to the right and left steered wheels 5R, 5L, the drive assist control device 61 outputs a vehicle speed command value V* and a drive-assist traveling direction θes* to the steering control device 1. The vehicle speed command value V* is a target value for the vehicle speed, and the drive-assist traveling direction θes* indicates the target traveling direction θd*. As an example, the drive assist control device 61 calculates a traveling direction that allows the vehicle 3 to travel to a safe place as the drive-assist traveling direction θes*.

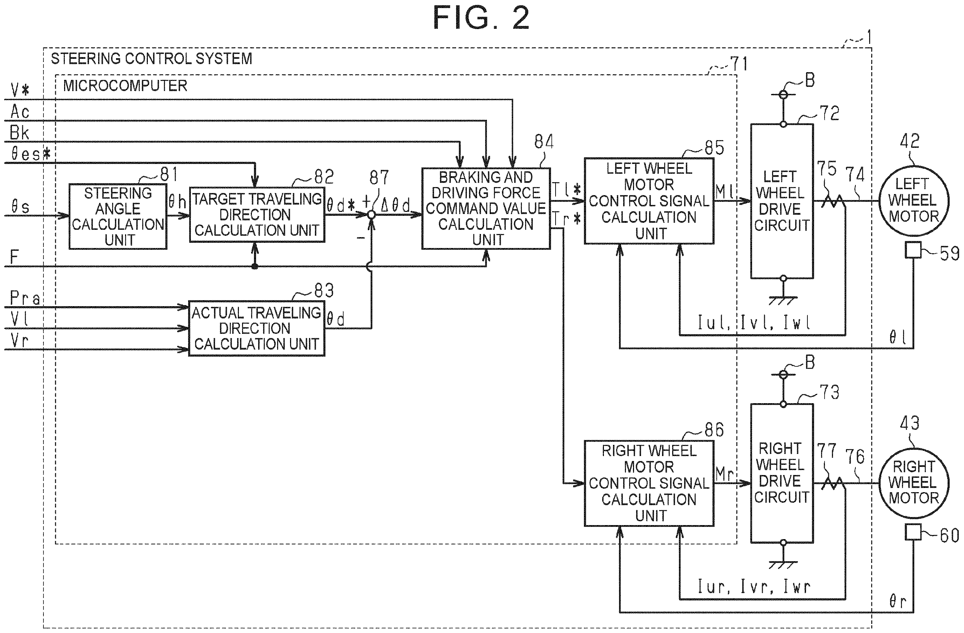

Next, the configuration of the steering control device 1 related to the control of the right and left wheel motors 43, 42 will be described. As shown in FIG. 2, the steering control device 1 includes a microcomputer 71 that outputs a right wheel motor control signal Mr and a left wheel motor control signal Ml for controlling operations of the right and left wheel motors 43, 42. The steering control device 1 also includes a right wheel drive circuit 73 and a left wheel drive circuit 72. The right wheel drive circuit 73 supplies a driving electric power to the right wheel motor 43 based on the right wheel motor control signal Mr. The left wheel drive circuit 72 supplies a driving electric power to the left wheel motor 42 based on the left wheel motor control signal Ml. A current sensor 75 and a current sensor 77 are connected to the microcomputer 71. The current sensor 75 detects phase current values Iul, Ivl, and Iwl that flow through a connection line 74 between the left wheel drive circuit 72 and the left wheel motor 42. The current sensor 77 detects phase current values Iur, Ivr, and Iwr that flow through a connection line 76 between the right wheel drive circuit 73 and the right wheel motor 43.

The right wheel drive circuit 73 and the left wheel drive circuit 72 of the embodiment each adopt a pulse width modulation (PWM) inverter that is known and includes a plurality of switching elements, such as a field-effect transistor (FET). The right wheel motor control signal Mr and the left wheel motor control signal Ml are gate ON and OFF signals that regulate an ON state or an OFF state of each switching element . The microcomputer 71 outputs the right wheel motor control signal Mr and the left wheel motor control signal Ml to the right wheel drive circuit 73 and the left wheel drive circuit 72, respectively, thereby the driving electric power is supplied from an on-board power supply B to the right wheel motor 43 and the left wheel motor 42. Thus, the microcomputer 71 controls operations of the right and left wheel motors 43, 42. In other words, the microcomputer 71 controls the braking and driving forces applied to the right and left steered wheels 5R, 5L independently of each other.

Next, the configuration of the microcomputer 71 will be described. The microcomputer 71 executes calculation process shown in each control block as described below for each calculation period to generate the right wheel motor control signal Mr and the left wheel motor control signal Ml. The microcomputer 71 receives inputs of the vehicle wheel speeds Vr, VI, the rotation angle θs of the steering-side motor 14, the accelerator signal Ac, the brake signal Bk, the stroke position Pra, the drive assist flag F, the vehicle speed command value V*, and the drive-assist traveling direction θes*. The microcomputer 71 then generates and outputs the right wheel motor control signal Mr and the left wheel motor control signal Ml based on the state quantities described above.

Specifically, the microcomputer 71 includes a steering angle calculation unit 81, a target traveling direction calculation unit 82, and an actual traveling direction calculation unit 83. The steering angle calculation unit 81 calculates the steering angle θh. The target traveling direction calculation unit 82 calculates the target traveling direction θd*. The actual traveling direction calculation unit 83 calculates the actual traveling direction θd. Further, the microcomputer 71 includes a braking and driving force command value calculation unit 84, a left wheel motor control signal calculation unit 85, and a right wheel motor control signal calculation unit 86. The braking and driving force command value calculation unit 84 calculates a right wheel braking and driving force command value Tr* and a left wheel braking and driving force command value Tl*. The right wheel braking and driving force command value Tr* and the left wheel braking and driving force command value Tl* are target values of the braking and driving forces that are applied to the right and left steered wheels 5R, 5L, respectively. The left wheel motor control signal calculation unit 85 calculates the left wheel motor control signal Ml. The right wheel motor control signal calculation unit 86 calculates the right wheel motor control signal Mr

The steering angle calculation unit 81 receives the rotation angle θs. The steering angle calculation unit 81 calculates the steering angle θh based on the rotation angle θs, as in the case where there is no abnormality found with the turning-side actuator 31. The target traveling direction calculation unit 82 receives the steering angle θh, the drive assist flag F, and the drive-assist traveling direction θes*. When the drive assist flag F indicates that the drive assist control is not being executed, the target traveling direction calculation unit 82 calculates the target traveling direction θd* based on the steering angle θh. As an example, the target traveling direction calculation unit 82 of the embodiment stores a map indicating a relationship between the steering angle θh and the target traveling direction θd*. The target traveling direction calculation unit 82 calculates the target traveling direction θd* corresponding to the steering angle θh with referring to the map. When the drive assist flag F indicates that the drive assist control is being executed, the target traveling direction calculation unit 82 calculates the drive-assist traveling direction θes* as the target traveling direction θd*.

The actual traveling direction calculation unit 83 receives the stroke position Pra and the vehicle wheel speeds Vr, VI. The actual traveling direction calculation unit 83 calculates the actual traveling direction θd of the vehicle 3 based on the state quantities described above.

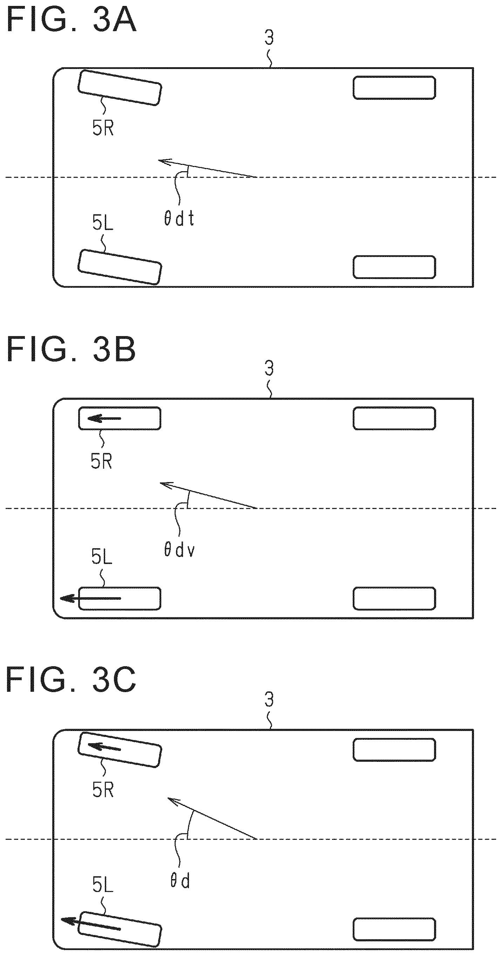

Specifically, the actual traveling direction calculation unit 83 stores a map indicating a relationship between the stroke position Pra and the steered angle θw of the right and left steered wheels 5R, 5L. The actual traveling direction calculation unit 83 calculates the steered angle θw of the right and left steered wheels 5R, 5L by referring to the map. Next, as shown in FIG. 3A, the actual traveling direction calculation unit 83 calculates a steered angle traveling direction θdt based on the calculated steered angle θw on assumption that the vehicle wheel speeds Vr, Vl are substantially equal to each other, that is, a difference between the vehicle wheel speeds Vr, Vl is substantially zero. Further, as shown in FIG. 3B, the actual traveling direction calculation unit 83 calculates a vehicle wheel speed traveling direction θdv that is caused by a difference between distances by which the right and left steered wheels 5R, 5L move forward per a unit time, based on (absolute values of) the vehicle wheel speeds Vr, VI. The actual traveling direction calculation unit 83 stores relationships of the steered angle θw with the traveling direction of the vehicle 3 when the vehicle wheel speeds Vr, Vl are substantially equal to each other and with the traveling direction of the vehicle 3 that is caused by a difference between the right and left steered wheels 5R, 5L. As shown in FIG. 3C, the actual traveling direction calculation unit 83 calculates a direction (angle) obtained by adding the steered angle traveling direction θdt with the vehicle wheel speed traveling direction θdv as the actual traveling direction θd.

As shown in FIG. 2, the braking and driving force command value calculation unit 84 receives the accelerator signal Ac, the brake signal Bk, the drive assist flag F, and the vehicle speed command value V*. Further, the braking and driving force command value calculation unit 84 receives a directional (angular) deviation Δθd obtained by subtracting the actual traveling direction θd from the target traveling direction θd* in an adder 87. The braking and driving force command value calculation unit 84 calculates the right wheel braking and driving force command value Tr* and the left wheel braking and driving force command value Tl* based on the state quantities described above.

Specifically, the braking and driving force command value calculation unit 84 calculates the total of the right wheel braking and driving force command value Tr* and the left wheel braking and driving force command value Tl* based on the accelerator signal Ac and the brake signal Bk in a case where the drive assist flag F indicates that the drive assist control is not being executed. Specifically, the braking and driving force command value calculation unit 84 calculates the driving force indicated by the right and left wheel braking and driving force command values Tr*, Tl* to be larger as the accelerator pedal operation amount indicated by the accelerator signal Ac increases. The braking and driving force command value calculation unit 84 calculates the braking force indicated by the right and left wheel braking and driving force command values Tr*, Tl* to be larger as the depression amount indicated by the brake signal Bk increases. The braking and driving force command value calculation unit 84 determines a difference between the right wheel braking and driving force command value Tr* and the left wheel braking and driving force command value Tl* based on the directional deviation Δθd, and calculates the right and left wheel braking and driving force command value Tr*, Tl* so that the right and left wheel braking and driving force command values Tr*, Tl* have the determined difference and the total of the right and left wheel braking and driving force command values Tr*, Tl* are based on the accelerator signal Ac and the brake signal Bk.

The braking and driving force command value calculation unit 84 calculates the total of the right and left wheel braking and driving force command value Tr*, Tl* based on the vehicle speed command value V* in a case where the drive assist flag F indicates that the drive assist control is being executed. Specifically, the braking and driving force command value calculation unit 84 calculates the driving force indicated by the right and left wheel braking and driving force command values Tr*, Tl* to increase as the vehicle speed command value V* increases. The braking and driving force command value calculation unit 84 determines a difference between the right wheel braking and driving force command value Tr* and the left wheel braking and driving force command value Tl* based on the directional deviation Δθd, and calculates the right and left wheel braking and driving force command value Tr*, Tl* so that the right and left wheel braking and driving force command values Tr*, Tl* have the determined difference and the total of the right and left wheel braking and driving force command values Tr*, Tl* are based on the vehicle speed command value V*.

The left wheel motor control signal calculation unit 85 receives the rotation angle θ1 and the phase current values Iul, Ivl, and Iwl, in addition to the left wheel braking and driving force command value Tl*. The left wheel motor control signal calculation unit 85 of the embodiment calculates a d-axis target current value Idl* on a d-axis and a q-axis target current value Iql* on a q-axis in a dq coordinate system based on the left wheel braking and driving force command value Tl*. The target current values Idl*, Iql* indicates a target current value on the d-axis and a target current value on the q-axis, respectively, in the dq coordinate system. The left wheel motor control signal calculation unit 85 determines a sign of the q-axis target current value Iql* in accordance with the sign of the left wheel braking and driving force command value Tl*, and calculates the q-axis target current value Iql* that has a larger absolute value as the absolute value of the left wheel braking and driving force command value Tl* increases. According to the embodiment, the d-axis target current value Ids* on the d-axis is basically set to zero. The left wheel motor control signal calculation unit 85 generates the left wheel motor control signal Ml to be output to the left wheel drive circuit 72 by executing the current feedback control in the dq coordinate system.

Specifically, the left wheel motor control signal calculation unit 85 calculates the d-axis current value Idl and the q-axis current value Iql that are actual current values of the left wheel motor 42 in the dq coordinate system by mapping the phase current values Iul, Ivl, and Iwl on the dq coordinate system based on the rotation angle θl. The left wheel motor control signal calculation unit 85 calculates a target voltage value based on current deviations on the d-axis and the q-axis so that the d-axis current value Idl follows the target d-axis current value Idl*, and the q-axis current value Iql follows the target q-axis current value Iql*, and generates the left wheel motor control signal Ml having a duty ratio based on the target voltage value.

The right wheel motor control signal calculation unit 86 receives the rotation angle θr and the phase current values Iur, Ivr, and Iwr, in addition to the right wheel braking and driving force command value Tr*. The right wheel motor control signal calculation unit 86 of the embodiment calculates a d-axis target current value Idr* on the d-axis and a q-axis target current value Iqr* on the q-axis in the dq coordinate system based on the right wheel braking and driving force command value Tr*. The right wheel motor control signal calculation unit 86 determines a sign of the q-axis target current value Iqr* based on the sign of the right wheel braking and driving force command value Tr*, and calculates the q-axis target current value Iqr* that has a larger absolute value as the absolute value of the right wheel braking and driving force command value Tr* increases. According to the embodiment, the d-axis target current value Ids* on the d-axis is basically set to zero. The right wheel motor control signal calculation unit 86 generates the right wheel motor control signal Mr to be output to the right wheel drive circuit 73 by executing the current feedback control in the dq coordinate system, similar to operations by the left wheel motor control signal calculation unit 85.

The calculated left wheel motor control signal Ml is output to the left wheel drive circuit 72, and the calculated right wheel motor control signal Mr is output to the right wheel drive circuit 73. Consequently, the driving electric power in accordance with the left wheel motor control signal Ml is supplied from the left wheel drive circuit 72 to the left wheel motor 42. The driving electric power in accordance with the right wheel motor control signal Mr is supplied from the right wheel drive circuit 73 to the right wheel motor 43. The traveling direction of the vehicle 3 is controlled by applying the braking and driving forces indicated by the left wheel braking and driving force command value Tl* from the left wheel motor 42 to the left steered wheel 5L, and applying the braking and driving forces indicated by the right wheel braking and driving force command value Tr* from the right wheel motor 43 to the right steered wheel 5R.

Next, the effects of the embodiment will be described. The steering control device 1 calculates the actual traveling direction θd of the vehicle 3 based on the vehicle wheel speeds Vr, Vl of the right and left steered wheels 5R, 5L and the stroke position Pra, and controls the braking and driving forces that are applied from the right wheel motor 43 and the left wheel motor 42 to the right and left steered wheels 5R, 5L independently of each other so that the actual traveling direction θd follows the target traveling direction θd*. This makes it possible to control the traveling direction of the vehicle 3 even when the turning-side actuator 31 (steering device 2) malfunctions. When there is a difference between the right and left vehicle wheel speeds Vr, VI, the traveling direction of the vehicle 3 in accordance with the steered angle θw of the right and left steered wheels 5R, 5L is not consistent with the actual traveling direction of the vehicle 3. On the basis of this point, in the embodiment, the actual traveling direction θd is calculated based on the steered angle θw calculated based on the stroke position Pra and the right and left vehicle wheel speeds Vr, VI, and the braking and driving forces are controlled so that the actual traveling direction θd follows the target traveling direction θd*. Therefore, the traveling direction of the vehicle 3 can be controlled with high accuracy.

The embodiment may be modified as described below. The embodiment and the following modification can be combined with each other as long as they do not technically contradict each other. In the embodiment above, the steered angle θw is calculated based on the stroke position Pra. However, the invention is not limited to this. The steered angle θw may be calculated based on the rotation angle θt of the turning-side motor 32. Any other state quantities may be used as long as the state quantities are values that are convertible to the steered angle θw of the right and left steered wheels 5R, 5L.

In the embodiment above, the braking and driving forces applied to the right and left steered wheels 5R, 5L independently of each other are controlled using the right and left wheel motors 43, 42, each consisting of an in-wheel motor. However, the invention is not limited to this. For example, the braking and driving forces that are applied to the right and left steered wheels 5R, 5L independently of each other may be controlled using a brake. Further, the braking and driving forces that are applied to the right and left steered wheels 5R, 5L independently of each other may be controlled using, for example, a torque coupling (electromagnetic clutch) that can distribute the driving force from an engine (e.g. a motor or an internal combustion engine) to the right and left steered wheels 5R, 5L. Any devices may be adopted as the braking and driving force generation device as long as the device can apply the braking and driving forces to the right and left steered wheels 5R, 5L independently of each other.

In the embodiment described above, the steering control device 1 may be configured not to receive various signals from the drive assist control device 61. In the embodiment described above, the target traveling direction θd* is calculated based on the steering angle θh. However, the invention is not limited to this. For example, the target steering angle θh* may be calculated based on the steering torque Th, and the target traveling direction θd* may be calculated based on the calculated target steering angle θh*. The form of calculation may be modified as appropriate.

In the embodiment described above, the steering device 2 in which the turning portion 6 uses the turning-side motor 32 as the drive source is subject to the control executed by the steering control device 1. However, the invention is not limited to this. For example, the steering device 2 in which the turning portion 6 uses a hydraulic actuator as the drive source may be subject to the control executed by the steering control device 1.

In the embodiment described above, the control device for a vehicle is applied to the steering control device that controls operations of the steering device 2. However, the invention is not limited to this. For example, the control device for a vehicle may be applied to other control devices that do not have the steering device 2 as the control target.

Next, the technical idea that can be understood from the embodiment and the modification above will be described below. The control device for a vehicle controls the braking and driving forces so that the actual traveling direction follows the target traveling direction when the turning-side actuator malfunctions. The turning-side actuator includes the turning-side motor that applies to the turning portion the turning force by which the turning portion turns the steered wheels.

The control device for a vehicle calculates the target traveling direction based on the steering angle of the steering wheel coupled to the steering portion. In the control device for a vehicle, the target traveling direction is input from the drive assist control device.

In the control device for a vehicle, the braking and driving force generation device is an in-wheel motor provided for each of the steered wheels.

## Claims

1. A control device for a vehicle, the vehicle including: a steering device (2) including a steering portion (4) and a turning portion (6) that turns right and left steered wheels (5R, 5L) in accordance with a steering operation input to the steering portion (4), the steering device (2) having a structure in which power transmission to and from the steering portion (4) is separated from power transmission to and from the turning portion (6); a braking and driving force generation device configured to apply a braking force and a driving force to the right and left steered wheels (5R, 5L) independently of each other; a steered angle state quantity sensor that detects a steered angle state quantity that is convertible to a steered angle (θw) of the right and left steered wheels (5R, 5L); and a vehicle wheel speed sensor that detects a vehicle wheel speed of each of the right and left steered wheels (5R, 5L),
the control device **characterized by** comprising
an electronic control unit configured to control an operation of the braking and driving force generation device, to calculate an actual traveling direction (θd) which is an actual direction of travel of the vehicle, based on the vehicle wheel speed of each of the right and left steered wheels (5R, 5L) and the steered angle state quantity, and to cause the actual traveling direction (θd) to follow a target traveling direction (θd*) which is a target direction of travel of the vehicle.

2. The control device according to claim 1, wherein the braking and driving force generation device is a right wheel motor (43) and a left wheel motor (42), and the right wheel motor (43) and the left wheel motor (42) are provided in the right and left steered wheels (5R, 5L), respectively.
